# EUROPÄISCHE PATENTSCHRIFT

(11) **EP 1 391 234 B1**
(45) Veröffentlichungstag und Bekanntmachung des Hinweises auf die Patenterteilung: **03.01.2007**
(21) Anmeldenummer: 03018003.8
(22) Anmeldetag: 07.08.2003
(51) Int. Cl.: B01D 46/52, B01D 29/01

(54) **Luftfilter, insbesondere Innenraumfilter für Kraftfahrzeuge**
Air filter, in particular for passenger compartment of vehicles
Filtre à air, notamment pour l' habitacle intérieur d' un véhicule automobile

(30) Priorität: 13.08.2002 DE 10237022; 10.12.2002 DE 10257543
(43) Veröffentlichungstag der Anmeldung: 25.02.2004
(73) Patentinhaber: Behr GmbH & Co. KG, 70469 Stuttgart (DE); Carl Freudenberg KG, 69469 Weinheim (DE)
(72) Erfinder: Frey, Marcus, Dr.Dipl.-Ing., 71404 Korb (DE); Boschert, Björn, Dipl.-Ing., 71254 Ditzingen-Hirschlanden (DE); Häfner, Uwe, Dipl.-Ing., 69469 Weinheim (DE); Dobner, Roland, Dipl.-Ing., 69483 Wald-Michelbach (DE); Capuani, Peter, 69483 Waldmichelbach (DE); Felber, Uwe, Dipl.-Ing., 69518 Abtseinach (DE)
(74) Vertreter: Heumann, Christian

(56) Entgegenhaltungen:
- DE-A- 10 012 731
- DE-A- 19 859 618
- DE-U- 20 017 121

## Beschreibung

Die Erfindung betrifft ein Luftfilter nach dem Oberbegriff des Patentanspruches 1 sowie eine Vorrichtung zur Luftfilterung nach dem Oberbegriff des Patentanspruches 6.

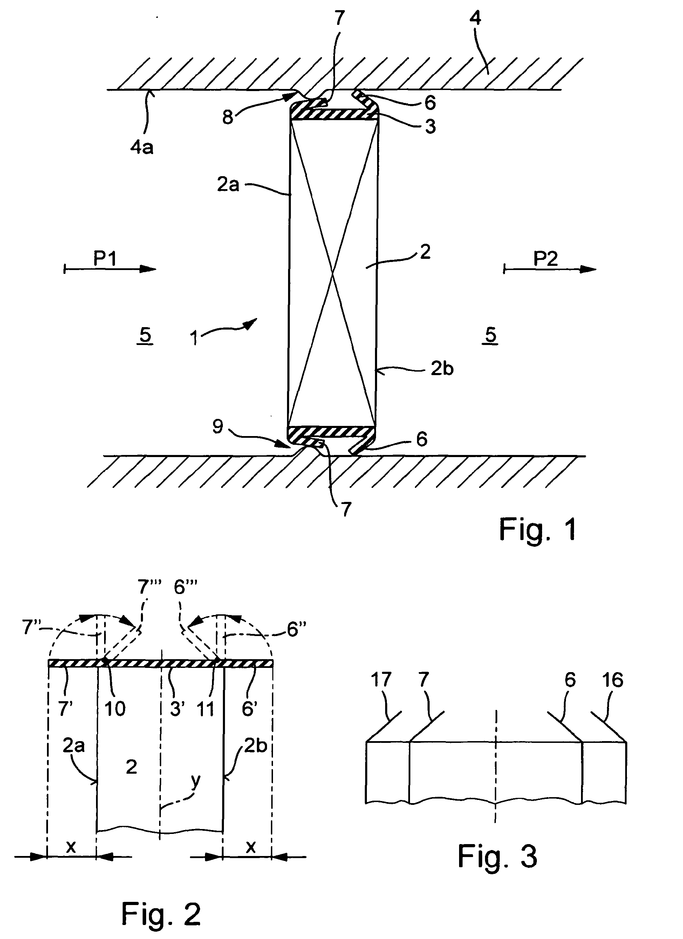

Ein durch die DE-A 195 48 197 bekannt gewordenes Luftfilter besteht aus einem Filtereinsatz bzw. Filtermedium, welches in einem Kunststoffrahmen befestigt ist. An den Rahmen ist umfangseitig eine elastische Dichtlippe angespritzt, welche den Filterrahmen gegenüber einem Filtergehäuse abdichtet. Beim Einsetzen des Rahmens in das Gehäuse wird die Dichtlippe entgegen der Einschubrichtung elastisch verformt und nimmt eine geneigte Lage zur Luftströmungsrichtung ein. Dadurch entstehen ein erhöhter Anpressdruck und eine verbesserte Dichtwirkung. Mit der einstückigen Herstellung von Filterrahmen und Dichtlippe ist ein gewisser Herstellungsaufwand verbunden, bedingt durch die Werkzeuge zum Spritzen von Rahmen und Dichtlippe. Darüber hinaus sind die Filterrahmen mit geneigt angespritzter Dichtlippe nur in einer Richtung in das Filtergehäuse einschiebbar; lediglich die Ausführung mit senkrecht abstehender Dichtlippe (Fig. 3) ist bezüglich der Einschubrichtung unabhängig. Dies ist jedoch mit einer stärkeren Verformung der Dichtlippe und einer erhöhten Bruchgefahr bzw. Versprödung im Wurzelbereich verbunden.

Eine andere Form der Abdichtung wurde durch die DE-A 34 39 255 für ein Luftfilter in Kraftfahrzeugen bekannt. Dieses Luftfilter weist an der Stimseite und umfangseitig angeordnete Dichtlippen auf, die durch Falzen eines aus Karton bestehenden Filterrahmens erzeugt sind. Bedingt durch die Lage und die Neigung der Dichtlippen, kann dieser Filtereinsatz nur in einer Richtung in das Gehäuse eingesetzt werden, d. h. mit den Falzkanten in Einschubrichtung, sodass die Dichtlippen am Filtergehäuse gleiten können.

Andere Arten von Abdichtungen für Luftfilter wurden durch die EP-A 0 620 133 und EP-A 0 639 474 bekannt, wobei es sich um Schaumstoffdichtungen handelt, die ihre Dichtwirkung durch Pressung erzielen. Diese Art von Dichtungen ist einerseits von der Herstellung und auch von der Montage (Verkleben) aufwendig.

Durch die DE 198 59 618 A1 wurde ein Verfahren zur Herstellung eines Filterelements und ein Filtereinsatz, hergestellt nach diesem Verfahren, bekannt, wobei Dichtstreifen mit einem V-förmigen Profil vorkonfektioniert und anschließend auf die Seitenflächen des Filtereinsatzes geklebt werden. Auf einer Seitenfläche sind jeweils zwei Dichtstreifen angeordnet, welche zwei nach außen abstehende Dichtlippen bilden.

Durch die DE 100 12 731 A1 wurde ein Filter mit einem umfangseitigen Dichtrahmen bekannt, welcher so genannte Weichlippen zur Abdichtung des Filters gegenüber einem Gehäuse aufweist Der Dichtrahmen, bestehend aus anklebbaren Seitenwänden und Weichlippen, wird durch Extrusion hergestellt Dabei sind verschiedene Ausbildungen und Anordnungen von Weichlippen offenbart, d. h. mit einer oder zwei Dichtlippen, welche in die gleiche Richtung weisen oder V-förmig angeordnet sind.

Es ist Aufgabe der vorliegenden Erfindung, ein Luftfilter und eine Vorrichtung zur Luftfilterung der eingangs genannten Art, insbesondere den Rahmen bezüglich seiner Abdichtung im Filtergehäuse zu verbessern, wobei die Dichtfunktion unabhängig von der Einbaulage bzw. Einschubrichtung gewährleistet sein und die Herstellkosten herabgesetzt werden sollen.

Die Lösung dieser Aufgabe ergibt sich aus den Merkmalen des Patentanspruches 1. Erfindungsgemäß weist der Rahmen überstehende Randstreifen auf, welche durch Falzen oder Knicken zu Dichtlippen umgeformt werden. Je nach Bauart des betreffenden Filtergehäuses können die Dichtlippen dabei nach innen oder nach außen umgeknickt werden und sich dabei mit elastsicher Vorspannung an das Filtergehäuse anlegen, wodurch eine sehr gute Dichtfunktion erzielt wird. Aufgrund der symmetrischen Ausbildung der überstehenden Randstreifen und der daraus geformten Dichtlippen kann der Filtereinsatz in beiden Richtungen montiert werden.

Nach einer vorteilhaften Ausgestaltung der Erfindung sind im Rahmen des Luftfilters Sollknickstellen vorgesehen, z. B. in Form von geritzten Knicklinien. Daraus resultiert der Vorteil, dass eine eindeutige Knickkante definiert und das Umklappen der Randstreifen erleichtern wird.

In weiterer vorteilhafter Ausgestaltung der Erfindung sind die Dichtlippen im eingebauten Zustand gegeneinander geneigt, d. h. mit ihren Dichtkanten zueinander weisend. Dadurch wird die jeweils stromabwärts gelegene Dichtlippe aufgrund des Luftströmungsdruckes gegen das Filtergehäuse gedrückt.

Nach einer weiteren vorteilhaften Ausgestaltung der Erfindung kann der Dichtrahmen in einer Mittelebene geteilt und zweiteilig ausgebildet sein.

In weiterer vorteilhafter Ausgestaltung der Erfindung kann die Zahl der Dichtlippen vervielfacht werden, wodurch sich der Vorteil einer besseren Abdichtung ergibt.

Die Aufgabe der Erfindung wird auch durch eine Vorrichtung mit den Merkmalen des Patentanspruches 6 gelöst. In vorteilhafter Weiterbildung sind an dem Filtergehäuse, in welches das Luftfilter eingesetzt ist, noppenartige Erhebungen vorgesehen, mittels derer die stromaufwärts gelegene Dichtlippe an den Filterrahmen angedrückt wird, damit die stromabwärts gelegene Dichtlippe voll vom Luftstrom beaufschlagt wird und somit eine erhöhte Dichtwirkung erzeugen kann.

Ausführungsbeispiele der Erfindung sind in der Zeichnung dargestellt und werden im Folgenden näher beschrieben. Es zeigen
- Fig. 1: ein Luftfilter im Einbauzustand mit stimseitig angeordneten Dichtlippen,
- Fig. 2: einen Filterrahmen vor der Herstellung der Dichtlippen und
- Fig. 3: ein erweitertes Ausführungsbeispiel zu Fig. 1.

**Fig. 1** zeigt ein Luftfilter 1, welches aus einem Filtermedium 2 und einem rechteckigen Filterrahmen 3 besteht, in welchem das Filtermedium 2 gehalten, vorzugsweise verklebt ist. Das Luftfilter 1 ist in ein Filtergehäuse 4 eingesetzt, welches Teil einer nicht dargestellten Kraftfahrzeug-Klimaanlage sein kann. Das Filtergehäuse 4 bildet einen Strömungskanal 5, durch welchen Luft in Richtung des Pfeils P1 strömt und auf eine Stimseite 2a des Filtermediums 2 trifft. Die Luft durchströmt das Filtermedium 2 und wird dabei auf bekannte Weise gefiltert und gereinigt. Die gereinigte Luft tritt aus einer rückwärtigen Stimseite 2b aus dem Filtermedium 2 aus und strömt entsprechend dem Pfeil P2 in Richtung Klimaanlage bzw. Innenraum des Kraftfahrzeuges. Da das Filter bei Verschmutzung ausgetauscht wird, muss es ohne weiteres ausbaubar und wieder einsetzbar sein, wobei eine sichere Abdichtung zum Filtergehäuse 4 gewährleistet sein muss. Der Filterrahmen 3 weist daher an seinem Umfang ein Paar von Dichtlippen 6, 7 auf, wobei die leewärts (stromabwärts) gelegene Dichtlippe 6 an der Gehäusewand 4a des Filtergehäuses 4 anliegt. Die vordere bzw. luvseitige Dichtlippe 7 ist durch am Gehäuse 4 angeordnete noppenartige Erhebungen 8, 9 von der Gehäusewand 4a abgedrückt bzw. an den Filterrahmen 3 angedrückt. Damit entfaltet die vordere Lippe 7 bei der hier gezeigten Anströmrichtung gemäß Pfeil P1 keine Dichtwirkung. Vielmehr trifft der Druck der strömenden Luft in vollem Umfang auf die leeseitige Dichtlippe 6 und erzeugt damit einen erhöhten Anpressdruck und eine entsprechend erhöhte Dichtwirkung. Die Noppen 8, 9 könnten auch entfallen, da die luvseitige bzw. vordere Lippe ohnehin von der Luftströmung niedergedrückt wird. Beide Dichtlippen 6, 7 bilden eine so genannte Doppellippe und sind einstückig an den Rahmen 3 angeformt, d. h. durch Umknicken von überstehenden Rahmenwänden, wie im Folgenden erläutert wird.

**Fig. 2** zeigt einen Ausschnitt des Luftfilters 1 mit dem Rahmen 3' vor der Erzeugung der Dichtlippen 6, 7. Der Rahmen 3' ist als kastenförmiges Kunststoffspritzteil hergestellt oder auch als Kunststoffstreifen ausgebildet, der auf den Umfang des Filtermediums 2 aufgeleimt wird. Dieser Rahmen 3' überragt die Stirnflächen 2a, 2b jeweils um einen Betrag x, der der Größe der Dichtlippen 6, 7 entspricht. Etwa im Bereich der Ebenen der Stirnflächen 2a, 2b sind auf der Außenfläche des Rahmens 3' Sollknickstellen 10,11 vorgesehen, d. h. senkrecht zur Zeichenebene verlaufende Knick- oder Falzlinien, um welche die überstehenden Randstreifen 6', 7' zunächst nach oben in eine senkrechte, gestrichelt dargestellte Position 6", 7" und dann in eine nach innen geneigte, ebenfalls gestrichelt dargestellte Position 6"', 7"' umgeklappt werden. Dieses Umklappen der Dichtlippen 6, 7 erfolgt vorzugsweise für alle vier Seiten des rechteckförmig ausgebildeten Rahmens 3. Die dermaßen umgeklappten bzw. umgeknickten Dichtlippen 6"', 7"' unterliegen einer Rückstellkraft und federn daher zurück. Für den Einbau des Luftfilters 1 bzw. des Rahmens 3 müssen die Dichtlippen daher - zumindest eine von beiden - je nach Einschubrichtung niedergedrückt werden. Nach Erreichen der Einbauposition (vgl. Fig. 1) liegt die luvseitige Dichtlippe 7 im Bereich der noppenartigen Erhebungen 8, 9 an der Gehäusewand 4a, d. h. die Dichtlippe 7 wird von der Gehäusewand 4a weggedrückt und an den Filterrahmen 3 angedrückt. Dadurch besteht durch diese Dichtlippe 7 keine Dichtwirkung mehr, sodass - wie oben erwähnt - die leeseitige Dichtlippe 6 mit dem vollen Strömungsdruck beaufschlagt wird. Der Luftfilter 1 entsprechend Fig. 1 oder 2 kann also infolge der symmetrischen Anordnung der beiden Dichtlippen 6, 7 zueinander in jeder Richtung in den Luftkanal 5 eingeschoben werden. Der Rahmen 3 kann auch in einer Mittelebene y geteilt und zweiteilig ausgebildet sein.

Fig. 3 zeigt - in schematischer Darstellung - eine Abwandlung bzw. ErWeiterung des Ausführungsbeispieles gemäß Fig. 1 und 2 durch Verdopplung der Anzahl der Einzellippen. Den Einzellippen 6, 7 (gemäß Fig. 1) sind jeweils parallel angeordnete weitere Lippen 16,17 hinzugefügt, wodurch die Dichtwirkung verbessert wird.

## Patentansprüche

1. Luftfilter, insbesondere Innenraumfilter für Kraftfahrzeuge zum Einsatz in ein Filtergehäuse, wobei das Luftfilter (1) ein von einem Luftstrom durchströmbares Filtermedium (2) und umfangseitig einen Rahmen (3) mit mindestens zwei Dichtlippen (6, 7) zur Abdichtung gegenüber dem Filtergehäuse (4) aufweist, **dadurch gekennzeichnet, dass** der Rahmen (3) zumindest teilweise aus einem Kunststoffstreifen hergestellt ist, der über die Stirnseiten (2a, 2b) des Filtermediums (2) hinausstehende Randstreifen (6', 7') aufweist, und dass die Dichtlippen (6, 7) durch Falzen oder Knicken der Randstreifen (6', 7') herstellbar sind.

2. Luftfilter nach Anspruch 1, **dadurch gekennzeichnet, dass** der Rahmen (3) Sollknickstellen (10, 11) aufweist, welche insbesondere als Knick- oder Falzlinien ausgebildet sind.

3. Luftfilter nach Anspruch 1 oder 2, **dadurch gekennzeichnet, dass** die Dichtlippen (6, 7) in entgegengesetzte Richtungen geneigt sind.

4. Luftfilter nach Anspruch 1, 2 oder 3, **dadurch gekennzeichnet, dass** der Rahmen (3) in einer Mittelebene geteilt und zweiteilig ausgebildet ist.

5. Luftfilter nach einem der vorhergehenden Ansprüche, **dadurch gekennzeichnet, dass** die Zahl der Dichtlippen (6, 7) vervielfacht, insbesondere verdoppelt ist, indem jeder Dichtlippe (6, 7) mindestens eine weitere Dichtlippe (16, 17) parallel zugeordnet ist.

6. Vorrichtung zur Luftfilterung, insbesondere zum Filtern von Luft für einen Inneraum eines Kraftfahrzeuges, bestehend aus einem Luftfilter (1) und einem Filtergehäuse (4), wobei das Luftfilter (1) ein von einem Luftstrom durchströmbares Filtermedium (2) und umfangseitig einen Rahmen (3) mit mindestens zwei Dichtlippen (6, 7) zur Abdichtung gegenüber dem Filtergehäuse (4) aufweist, **dadurch gekennzeichnet, dass** das Luftfilter (1) nach einem der vorhergehenden Ansprüche ausgebildet ist.

7. Vorrichtung nach Anspruch 6, **dadurch gekennzeichnet, dass** am Filtergehäuse (4) noppenartige Erhebungen (8, 9) angeordnet sind, durch welche eine Dichtlippe (7) von der Gehäusewand (4a) weggedrückt ist.

## Claims

1. Air filter, in particular passenger compartment filter for motor vehicles, for insertion into a filter housing, the air filter (1) having a filter medium (2) through which an air current can flow and having, at the periphery, a frame (3) with at least two sealing lips (6, 7) for providing sealing relative to the filter housing (4), **characterized in that** the frame (3) is produced at least partially from a plastic strip which has edge strips (6', 7') which project beyond the end sides (2a, 2b) of the filter medium (2), and **in that** the sealing lips (6, 7) can be produced by folding or bending the edge strips (6', 7').

2. Air filter according to Claim 1, **characterized in that** the frame (3) has predetermined bending points (10, 11) which are formed in particular as bending or folding lines.

3. Air filter according to Claim 1 or 2, **characterized in that** the sealing lips (6, 7) are inclined in opposite directions.

4. Air filter according to Claim 1, 2 or 3, **characterized in that** the frame (3) is divided in a central plane and is formed in two parts.

5. Air filter according to one of the preceding claims, **characterized in that** the number of sealing lips (6, 7) is multiplied, in particular doubled, by virtue of each sealing lip (6, 7) being assigned at least one further parallel sealing lip (16, 17).

6. Air filtering device, in particular for filtering air for a passenger compartment of a motor vehicle, comprising an air filter (1) and a filter housing (4), the air filter (1) having a filter medium (2) through which an air current can flow and having, at the periphery, a frame (3) with at least two sealing lips (6, 7) for providing sealing relative to the filter housing (4), **characterized in that** the air filter (1) is embodied according to one of the preceding claims.

7. Device according to Claim 6, **characterized in that** knob-like raised portions (8, 9) are arranged on the filter housing (4), said raised portions (8, 9) pushing a sealing lip (7) away from the housing wall (4a) .

## Revendications

1. Filtre à air, notamment filtre pour l'habitacle de véhicules automobiles, destiné à l'utilisation dans un boîtier de filtre, le filtre à air (1) présentant un agent filtrant (2) pouvant être parcouru par un flux d'air et du côté périphérique un cadre (3) avec au moins deux lèvres d'étanchéité (6, 7) pour réaliser l'étanchéité vis-à-vis du boîtier de filtre (4), **caractérisé en ce que** le cadre (3) est fabriqué au moins en partie à partir d'une bande de plastique qui présente des bandes de bord (6', 7') dépassant au-delà des côtés frontaux (2a, 2b) de l'agent filtrant (2), et **en ce que** les lèvres d'étanchéité (6, 7) peuvent être fabriquées par pliage ou flexion des bandes de bord (6', 7').

2. Filtre à air selon la revendication 1, **caractérisé en ce que** le cadre (3) présente des points destinés à la flexion (10, 11) qui sont réalisés notamment sous la forme de lignes de flexion ou de pliure.

3. Filtre à air selon la revendication 1 ou 2, **caractérisé en ce que** les lèvres d'étanchéité (6, 7) sont inclinées dans des directions opposées.

4. Filtre à air selon la revendication 1, 2 ou 3, **caractérisé en ce que** le cadre (3) est divisé en un plan médian et est réalisé en deux parties.

5. Filtre à air selon l'une quelconque des revendications précédentes, **caractérisé en ce que** le nombre des lèvres d'étanchéité (6, 7) est multiplié, notamment doublé, en associant à chaque lèvre d'étanchéité (6, 7) au moins une autre lèvre d'étanchéité (16, 17).

6. Dispositif de filtration d'air, notamment pour filtrer de l'air pour un habitacle d'un véhicule automobile, constitué d'un filtre à air (1) et d'un boîtier de filtre (4), le filtre à air (1) présentant un agent filtrant (2) pouvant être parcouru par un flux d'air et du côté périphérique un cadre (3) avec au moins deux lèvres d'étanchéité (6, 7) pour réaliser l'étanchéité vis-à-vis du boîtier de filtre (4), **caractérisé en ce que** le filtre à air (1) est réalisé selon l'une quelconque des revendications précédentes.

7. Dispositif selon la revendication 6, **caractérisé en ce que** des rehaussements (8, 9) en forme de boutons sont prévus sur le boîtier de filtre (4), lesquels permettent de repousser une lèvre d'étanchéité (6, 7) de la paroi du boîtier (4a).
